# EUROPEAN PATENT SPECIFICATION

(11) **EP 0 860 111 B1**
(45) Date of publication and mention of the grant of the patent: **08.11.2000**
(21) Application number: 98830073.7
(22) Date of filing: 17.02.1998
(51) Int. Cl.: A01K 61/00

(54) **Method and plant for mussel farming**
Verfahren und Anlage zur Muschelzucht
Procédé et installation d'élevage de moules

(30) Priority: 20.02.1997 IT BS970015
(43) Date of publication of application: 26.08.1998
(73) Proprietor: Palbox Industriale S.p.A., 20060 Basiano (Milano) (IT)
(72) Inventor: Mora, Gianpaolo, 25126 Brescia (IT); Odorico, Roberto, 34125 Trieste (IT)
(74) Representative: Manzoni, Alessandro

(56) References cited:
- FR-A- 2 127 380
- FR-A- 2 308 310
- FR-A- 2 586 895
- FR-A- 2 589 323
- FR-A- 2 617 373

## Description

The present invention concerns a new method and plant for mussel farming.

It is a well known fact that the concentration of animals in the larva and young state present in a column of sea water is such that in a short time any object placed in the sea gets covered in sessile organisms. Mussel farmers take advantage of this aspect and are able to produce marketable species from artificial installations in the sea. In traditional mussel farming the widely practiced and so-called long-lines system as a substratum is used at present.
They are vertical lines either of cables or tubular nets placed in series attached to buoys.
The system conceived in this way however requires numerous maintenance operations and periodical replacement of the lines as the mussels are placed inside them to grow. If careful observations are carried out among the hanging mussel farming long lines, the aggregating function of these spaces can be observed for certain ichthyic species who find safe havens in the middle of the sea. Haptotropism , the name given to this phenomena, is used to advantage by certain artisan fishermen where they use interlaced branches and foliage suspended in the water in order to make the fishing zone more productive. Fish which can be caught congregate in this artificial forest.

A series of experiments on the artificial structures have stemmed from these following well established traditions and considerations: from blocks of cement used as obstacles to prevent trawl fishing in order to conserve some areas destined for other forms of exploitation, to the use of "FAD" (Fish Aggregating Devices) systems, special semi-buoyant mechanisms capable of attracting fish.

The beneficial effects of these systems have been proved: increase in the biomass of an area, increase in the biological diversity, possibility of intervening to develop certain communities on the basis of the system chosen.
As a further development in marine organism breeding, patent FR-A-2.617.373 describes the use of an artificial substrate for developing the marine biomass and absorb the energy of wove movement. This substrate consists of linear units, each made up of a polethylene pipe that is anchored to the bottom of the seabed and partially filled with foam of closed cells to make it float. However, the pipes used have an outer smooth surface, except for the presence of water inlet holes below the foam, and as such they provide large surface areas for the organism habitat.
Document FR-A-2 589 323 describes a container with ondulated walls for the larvae of shellfish such as oyesters, but made up of a net.
The available state of the art does not describe or suggest the use of corrugated plastic pipes fo mussel organism farming. Pipes of such a configuration offer a greater surface area on which the organisms may grow.
It is therefore an object of the present invention to propose a method and an installation for mussel farming which allow for: a lowering of labor costs thanks to a reduction and simplification of work tasks on the part of the operators in order to achieve a marketable products; less impact on the environment thanks to a reduction in waste deriving from production; an increase in the exploitation of the water column thanks to improved production compared to the usual farming systems.
This object is achieved by a method for breeding mussel organisms in accordance with claim 1 and using a plant for breeding mussel organisms in accordance with claim 4,that is to say emplying transversely corrugated plastic tubes which offer larger surfaces for maintaining the organisms.

The length of the tubular structures used and their immersion in water may be limited to lengths from about 0.5 to 2.0 m, and their diameter varying very much from 20 to 1000 mm, the results produced are however always excellent and with production comparable to that found using long-lines of 5-6 m in length.

The tubular structures for the culture substratum have the advantage of being made of a plastic such as for example polyethylene, which is corrugated crosswise that is undulated along their whole lengths.

These corrugated tubes replace the traditional long lines or nets, are easy to find on the market, represent a product which has never been used for the specific function presented here and have the extremely important prerogatives of being non-toxic, sea water resistant, light and to form ideal substratum surfaces on which the mussels can collect right from the attachment stage of the larvae.

Given the possible reduction in the water column used compared with the normal long-line cultures other factors can be taken into consideration.

One of the first considerations is that a 400 mm approx. corrugated polyethylene tubular structure according to the claim can profitably replace up to five strings of standard culture.

Another consideration regards the shower of pseudo feces from the mussels which at present only increases the sediment beneath the culture without reinstatement into a usable cycle, transforming, on the contrary, the bed into a uniform stretch of mud.

A modular cylindrical corrugated polyethylene structure can be installed in the deeper water column for the use of new culture structures left unoccupied so as to form a solid habitat which is at present lacking, capable of supplying the plankton larvae of the sessile species with a suitable substratum. Furthermore, the particular structure which now rises from the sea bed can provide a haven and aggregate the ichthyic community exploitable by the fishing industry

The attached drawings further illustrate the present invention. In these drawings:
Fig. 1 illustrates an example of a tubular structure usable in the mussel farming method according to the claim.
Fig. 2 illustrates a partial longitudinal cross section of the tube in Fig. 1.
Figures 3 and 4 show two non limiting examples for the sea bed to haven and aggregate ichthyic communities; and
Figures 5 and 6 show two schematic views of several tubular structures in an installation for mussel farming.

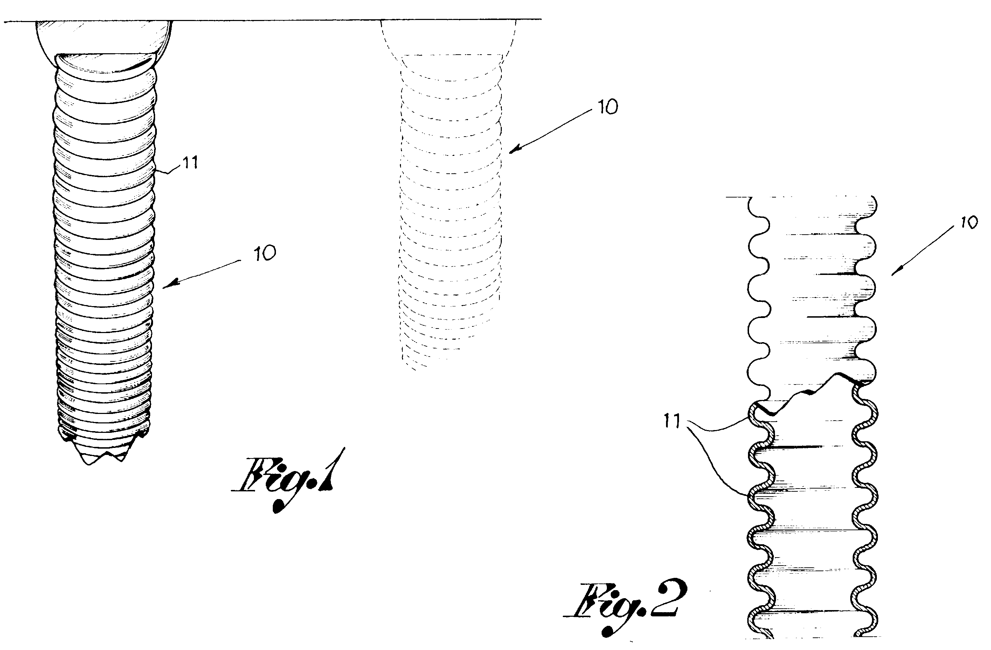

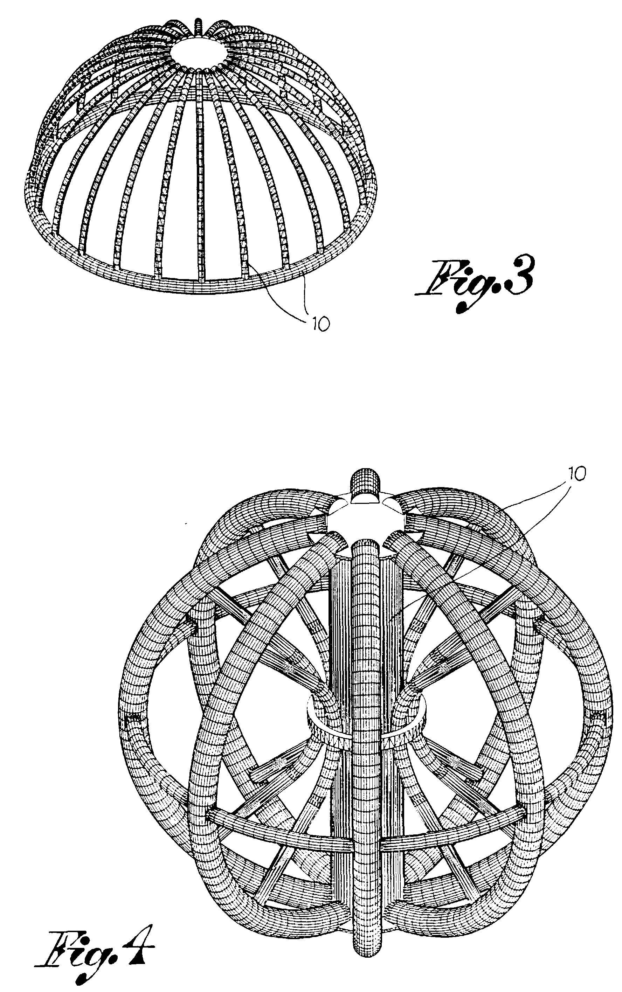

As said above, the tubular structure 10 is made of plastic, as shown in Figures 1 and 2, it has a corrugated surface 11 undulated along its whole length. In preference and for better results, the tubular structure is made using a high density polyethylene mix and lampblack as an additive used in quantities of not less than 2% in weight and with 2% in weight of mineral loads.

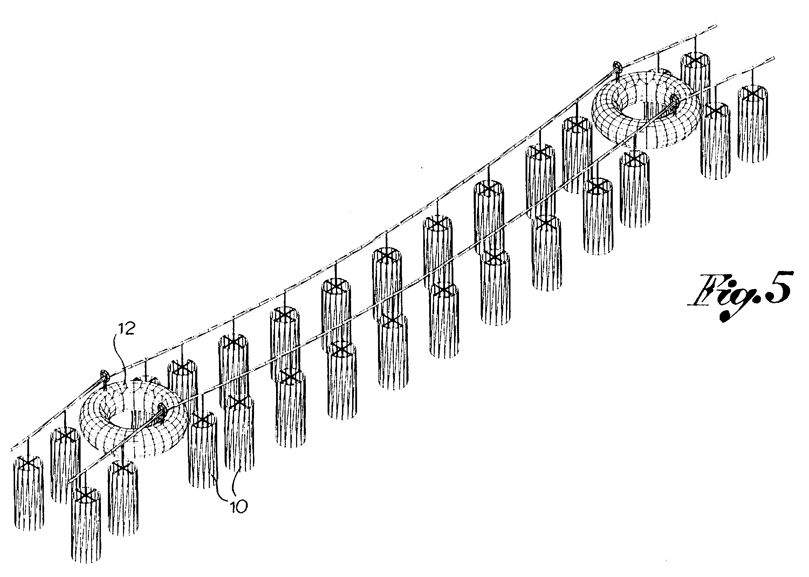

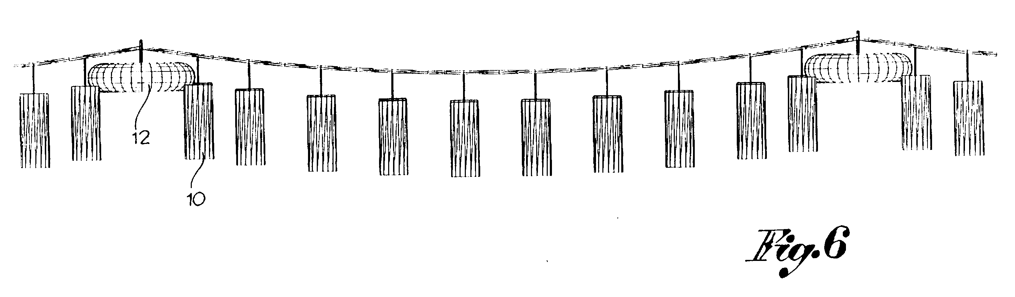

The tubular structure made in this way is chosen having a suitable length and diameter, supported and placed hanging in the water as a unit together with others and held in position by a system of cables and buoys 12 as shown in the drawings in Figures 5 and 6; the buoys can be made of the same or different material than the tubular structure.

The tubular structure 10 can also be used to form composite structures such as those shown in Figures 3 and 4 or to form other shapes not illustrated. These structures are placed on the sea bed of the farming area below the hanging tubular structures to form a solid substratum for sessile type plankton larvae and to host ichthyic communities for the fishing industry or as breeding grounds.

Fundamentally, the mussel farming method proposed and described herein allows for an increase in the production possibilities of a farming area with the possibility of exploiting other species and ichthyic communities. Furthermore, in addition to the advantages already referred to above, the system also offers advantages from a technical point of view; less construction costs, lowering of transport and positioning costs, simple modular assembly plus advantages from a scientific-biological point of view such as the integrity of the substratum in the area involved, possibility of using recyclable, plastic such as polyethylene and reversion of the plant for possible repositioning.

All the aforesaid obtained and confirmed by experiments carried out in areas already set aside for mussel farming using traditional methods.

## Claims

1. A method for breeding mussel organisms by using, as a culture substratum, rigid or semi-rigid tubular structures immersed and supported in sea water wherein said tubular structures comprise transversely corrugated plastic tubes (10-11) and the mussel organisms are maintained on the surfaces of said structures from the seminal stage through the whole period of their growth.

2. The method for breeding mussel organisms according to claim 1, wherein said tubular structures comprises transversely corrugated tube units (10-11) which have lenghts from about 0,5 to about 2 m and a diameter ranging from 20 to 1000 mm.

3. The method fro breeding mussel organisms according to claims 1 and 2, wherein solid structures are placed below the tubular structures to house and aggregate ichthyic communities.

4. A plant for breeding mussel organisms in accordance with the method in claim 1 comprising, as a culture substratum, tubular structures immersed and positioned in the water, characterized in that said structures are formed from poliethylene tube units (10) which are corrugated crosswise (11), that is to say undulated along their length, said tubular structures being connected to a floating system (12).

5. The plant according to claim 4 further characterized in that the three dimensional structures are positioned below the tubular culture structures on the sea bed, each three dimensional structure being made up of plastic tubes with corrugated surfaces, that is to say undulated crosswise.

## Patentansprüche

1. Methode zum Züchten von Miesmuscheln unter Anwendung röhrenförmiger in Meereswasser getauchter Strukturen, die als Zucht-Nährboden dienen, wobei die röhrenförmigen Strukturen quer geriffelte Rohre aus Kunststoff (10-11) einschließen und die Miesmuscheln auf der Oberfläche dieser Strukturen von der Semenphase bis zur Wachstumsphase und während dieser Wachstumsphase gehalten werden.

2. Methode zum Züchten der Miesmuscheln entsprechend Anspruch 1, wobei die obengenannten röhrenförmigen Strukturen quer geriffelte röhrenförmige Rohre (10 - 11) mit einer Länge von etwa 0,5 bis etwa 2 m und einem Durchmesser von etwa 20 bis etwa 1000 mm einschließen.

3. Methode zum Züchten der Miesmuscheln entsprechend Anspruch 1 und Anspruch 2, wobei sich feste Strukturen unter den röhrenförmgien Strukturen befinden, die Fischgemeinschaften enthalten und ihr Sammeln ermöglichen.

4. Eine Pflanze zum Züchten von Miesmuscheln entsprechend der Methode unter Anspruch 1 einschließlich in Wasser getauchter bzw. gestellter röhrenförmiger Strukturen, die als Zucht-Nährboden dienen. Diese Strukturen bestehen aus kreuzweise (11) geriffelten bzw. auf der gesamten Länge welligen Rohren aus Polyäthylen (10), die mit einem schwimmenden System (12) verbunden sind.

5. Die Pflanze entsprechend Anspruch 4 ist dadurch gekennzeichnet, daß sich die dreidimensionalen Strukturen unter den röhrenförmigen Zucht-Struckturen auf dem Meeresbett befinden; alle drei dimensionalen Strukturen bestehen aus Kunststoff-Rohren mit geriffelten bzw. kreuzweise welligen Oberflächen.

## Revendications

1. Un système d'élevage d'organismes de moules en utilisant comme fond de culture des armatures tubulaires plongées et soutenues dans l'eau de mer, lesdites armatures tubulaires étant formées par des tubes en plastique à ondulation transversale (10 - 11) et les organismes de moules étant maintenus sur la surface desdites armatures depuis l'étape séminale et pendant toute la période de croissance.

2. Le système d'élevage d'organismes de moules conforme à la revendication 1 dans lequel l'armature tubulaire est formée par des tubes à ondulation transversale (10 - 11) d'une longueur de 0,5 à 2 m et de diamètre compris entre 20 et 1000 mm.

3. Le système d'élevage d'organismes de moules conforme aux revendications 1 et 2 dans lequel des structures solides sont placées sous les armatures tubulaires pour accueillir et regrouper des colonies de poissons.

4. Une installation d'élevage d'organismes de moules conformément à la méthode décrite à la revendication 1 comprenant, comme fond de culture, des armatures tubulaires plongées et placées dans l'eau, lesdites armatures sont formées par des tubes en polyéthylène (10) à ondulation en croix (11), ondulés sur toute leur longueur, lesdites armatures tubulaires étant reliées à un système flottant (12).

5. L'installation conforme à la revendication 4 caractérisée également par le fait que des structures tridimensionnelles sont placées sous les armatures tubulaires de culture sur le fond de mer, chaque structure tridimensionnelle étant formée par des tubes en plastique à ondulation en croix.
